# EUROPÄISCHE PATENTSCHRIFT

(11) **EP 3 335 860 B1**
(45) Veröffentlichungstag und Bekanntmachung des Hinweises auf die Patenterteilung: **11.11.2020**
(21) Anmeldenummer: 17207705.9
(22) Anmeldetag: 15.12.2017
(51) Int. Cl.: B29C 65/10, F24H 3/04

(54) **VORRICHTUNG ZUM VERSCHWEISSEN VON KUNSTSTOFFFOLIEN MITTELS HEISSGAS**
DEVICE FOR WELDING PLASTIC FILMS BY MEANS OF HOT GAS
DISPOSITIF DE SOUDAGE DE FEUILLES EN MATIÈRE PLASTIQUE À L'AIDE DE GAZ CHAUD

(30) Priorität: 16.12.2016 DE 102016124714
(43) Veröffentlichungstag der Anmeldung: 20.06.2018
(73) Patentinhaber: TOSS GmbH & Co. KG Verpackungssysteme, 35418 Alten-Buseck (DE)
(72) Erfinder: Toss, Ramon, 35418 Alten-Buseck (DE)
(74) Vertreter: Boult Wade Tennant LLP

(56) Entgegenhaltungen:
- EP-B1- 0 743 164
- DE-A1- 19 517 752
- US-A- 3 380 229
- US-A1- 2012 267 053

## Beschreibung

Die Erfindung betrifft eine Vorrichtung zum Verschweißen von Kunststofffolien mittels Heißgas gemäß dem Oberbegriff von Anspruch 1.

Derartige Vorrichtungen dienen in der Regel zum kontinuierlichen Verschweißen von thermoplastischen Folien, d.h. die Verschweißung erfolgt bei einer Relativbewegung zwischen Vorrichtung und Folie. Eine intermittierende Arbeitsweise ist ebenfalls möglich, wobei aber im Stillstand in der Regel die Luftzufuhr abgeschaltet wird.

Eine derartige Schweißvorrichtung ist in der EP 0 743 164 B1 beschrieben. Zwar ist die Temperatur des Heißgases in der genannten Vorrichtung gut regelbar, allerdings betrifft dieses lediglich die mittlere Temperatur des Heißgastroms insgesamt. Es hat sich herausgestellt, dass die Temperatur des Heißgases, welches aus einer weit entfernt von einer Gaseinlassöffnung gelegenen Auslassöffnung austritt, eine höhere Temperatur aufweist als das Heißgas, welches durch eine näher an einem Gaseinlass gelegene Auslassöffnung ausgeblasen wird. Dadurch kann es zu Unregelmäßigkeiten beim Verschweißen von Kunststofffolie kommen. So kann es sein, dass die Temperatur des Heißgases an der nahe am Gaseinlass gelegenen Auslassöffnung nicht ausreichend hoch ist, um die Kunststofffolie erfolgreich zu verschweißen. Im Gegensatz dazu kann eine zu hohe Temperatur an der entfernt vom Gaseinlass liegen Gasauslassöffnung zu einem unkontrollierten Schmelzen der Kunststofffolie führen. Zusätzlich führt eine ungleichmäßige Erhitzung des Heißgases zu einer bereichsweisen Überhitzung des Heizrohres, wodurch dieses Durchbrennen kann.

Zudem sind derartige Heizrohre häufig unsymmetrisch geformt, wie es beispielweise in DE 10 2014 010 184 A1 gezeigt ist. Dadurch ergeben sich zusätzliche Wegdifferenzen, die das Gas bei der Erwärmung innerhalb des Heizrohres zurücklegt, wodurch der Effekt der unterschiedlichen Temperaturen des ausströmenden Heißgases verstärkt wird.

Eine Vorrichtung gemäß dem Oberbegriff des Anspruches 1 ist aus der US 3 380 229 A bekannt.
Diese stellt eine Vorrichtung bereit, mit welcher das Gas gleichmäßig erhitzt werden kann und mit welcher die Temperatur des austretenden Gases präzise justierbar ist.
Die Aufgabe der Erfindung besteht darin, eine Vorrichtung zu schaffen, die flexibel an bestimmte Längen angepasst werden kann.

Erfindungsgemäß wird diese Aufgabe durch eine Vorrichtung gelöst, die modular aufgebaut ist, wobei jedes Modul mindestens einen mit elektrischem Strom durchflossenen Zweigrohrkörper mit wenigstens einer Gasauslassöffnung, wenigstens eine Zweigstelle und wenigstens einen Abschnitt des Hauptrohrkörpers aufweist. Durch eine modulare Ausgestaltung kann flexibel auf die benötigte Länge der Vorrichtung und die benötigte Anzahl an Zweigrohrkörpern mit wenigstens einer Gasauslassöffnung, insbesondere einer Gasauslassöffnung, eingegangen werden. Durch eine Anpassung der Anzahl an Modulen kann die Länge des Schweißbereichs flexibel angepasst werden und somit beispielweise die Geschwindigkeit des Kunststofffolienverschweißens erhöht und/oder einem erhöhten Wärmebedarf z.B. beim Verschweißen dickerer Folien begegnet werden.

Mit jedem Modul wird nicht nur ein weiterer Zweigrohrköper mit wenigstens einer Gasauslassöffnung vorgesehen, sondern auch ein Abschnitt eines Hauptrohrkörpers, so dass die Vorrichtung in Ihrem Gesamtaufbau an die gestellten Anforderungen angepasst werden kann.

Hauptmerkmale der Erfindung sind im kennzeichnenden Teil von Anspruch 1 angegeben. Ausgestaltungen sind Gegenstand der Ansprüche bis 13.

Bei einer Vorrichtung zum Verschweißen von Kunststofffolien mittels Heißgas mit wenigstens einem von elektrischem Strom zur Erwärmung des Heißgases durchflossenen Rohrkörper, wobei die Vorrichtung mindestens eine Gaseinlaßöffnung und mehrere benachbart zueinander angeordnete Gasauslaßöffnungen aufweist, aus denen die Kunststofffolie mit Heißgas angeblasen wird, sieht die Erfindung deshalb vor, dass die wenigstens eine Gaseinlassöffnung an einem Hauptrohrkörper vorgesehen ist, der mit einer Mehrzahl von Zweigrohrkörpern an Zweigstellen in Gasverbindung steht, wobei die Zweigrohrkörper jeweils wenigstens eine Gasauslassöffnung aufweisen und alle Zweigrohrkörper von elektrischem Strom durchflossen sind.

Anstelle eines einzigen, stromdurchflossenen Rohrkörpers, wie dies aus dem Stand der Technik bekannt ist, sind nun ein Hauptrohrkörper und mehrere Zweigrohrkörper vorgesehen. Die Zweigrohrkörper sind mit dem Hauptrohrkörper strömungsverbunden, so dass das durch die wenigstens eine Gaseinlassöffnung des Hauptrohrkörpers eintretende Gas sich in die Zweigrohrkörper verzweigt, diese durchströmt und dort erhitzt wird. Die Zweigstellen, als Verbindungsstellen zwischen Hauptrohrkörper und Zweigrohrkörpern, fungieren somit als Gaseinlassöffnungen der Zweigrohrkörper.

Das Gas, welches in der Regel Luft ist, wird bei der erfindungsgemäßen Konstruktion im Wesentlichen in den Zweigrohrkörpern erhitzt, die jeweils wenigstens eine, insbesondere genau eine Gasauslassöffnung aufweisen. Das vom Hauptrohrkörper in die Zweigrohrkörper strömende Gas weist dabei zunächst eine einheitliche Temperatur auf und wird jeweils über eine definierte Strecke in den Zweigrohrkörpern geführt. Dadurch weist das austretende Heißgas an allen Gasauslassöffnungen eine einheitliche Temperatur auf, die sehr präzise eingestellt werden kann.
Der im Verhältnis sehr kleine Querschnitt der Zweigrohre erlaubt auch eine effektivere Beheizung des Luftstromes durch einen verbesserten Wärmeübergang, während der zentrale Lufteinlass am Hauptrohe erhalten bleibt.

Die zu verschweißende Kunststofffolie wird in einem Abstand zu den Gasauslassöffnungen geführt und das Heißgas wird aus der mindestens jeweils einen Gasauslassöffnung der Zweigrohrkörper auf die zu verschweißende Kunststofffolie geblasen.

Die Temperatur des austretenden Heißgases wird durch die Stromstärke, Geometrie und Gas-Durchflussgeschwindigkeit bestimmt.

Bei einer bevorzugten Ausführungsform sind alle Gasauslassöffnungen der Zweigrohrkörper im Wesentlichen auf einer Achse angeordnet. Dadurch wird die zu verschweißende Kunststofffolie gleichmäßig in einem definierten Bereich angeblasen und dabei verschweißt. Die Gasauslassöffnungen können beispielweise linienartig oder bandartig angeordnet sein. Mit einer bandartigen Anordnung, die zusätzliche Gasauslassöffnungen erfordern kann, wird eine breitere Schweißnaht ermöglicht. Sowohl bei einer linienartigen als auch einer bandartigen Anordnung der Gasauslassöffnungen der Zweigrohrkörper weisen die Gasauslassöffnungen bevorzugt eine gemeinsame Gasausblasrichtung auf, so dass das Heißgas gezielt auf die zu verschweißende Kunststofffolie geblasen wird.

Vorzugsweise sind die Gasauslassöffnungen der Zweigrohrkörper derart angeordnet, dass alle Gasauslassöffnungen den gleichen Abstand zu der zu verschweißenden Kunststofffolie aufweisen. Dieses gewährleistet eine gleichmäßige Verschweißung der Folie, weil das Heißgas überall mit der gleichen Temperatur auf die Kunststofffolie trifft.

In einer bevorzugten Ausführungsform ist die wenigstens eine Gasauslassöffnung des jeweiligen Zweigrohrkörpers an einem der Zweigstelle gegenüberliegenden Ende angeordnet. Insbesondere ist vorgesehen, dass die Gasauslassöffnung an einer Stirnseite des Zweigrohrkörpers angeordnet ist, welche der Zweigstelle gegenüberliegt. Der Querschnitt des Zweigrohrkörpers bildet dabei in konstruktiv einfacher Weise die Austrittsöffnung, wobei sich dadurch auch eine besonders laminare Luftströmung einstellt, so dass eine bessere Fokussierung des Luftstromes in Richtung der Folie ermöglicht ist als bei einfachen Löchern in einer dünnen Wandung.

Durch die Mehrzahl an Zweigrohrkörpern, deren Anzahl variabel an die jeweiligen Anforderungen angepasst werden kann, wird eine schnelle Bearbeitung beim Verschweißen ermöglicht. Maßgeblich für die Verschweißung der an der Vorrichtung vorbeigeführten Folienlagen ist die Aufheizung auf Schmelztemperatur während des Durchlaufs. Die Anzahl an Zweigrohrkörpern bzw. die Strecke der mit heißem Gas angeströmten Zone erlaubt eine Anpassung an die Anforderungen der kontinuierlichen Verschweißung. Sie lässt sich genau so lang ausbilden, wie zur Erzielung einer vorgegebenen Schweißgeschwindigkeit notwendig. Jeder zusätzliche Zweigrohrkörper bewirkt eine schrittweise und definierte Steigerung des Wärmeeintrags in die Folienlagen. Sind beispielweise viele Zweigrohrkörper mit jeweils mindestens einer Gasauslaßöffnung vorgesehen, kann die zu verschweißende Kunststofffolie in einer hohen Geschwindigkeit an der Vorrichtung vorbeigeführt werden. Dadurch ist eine höhere Taktrate erzielbar.

Wie erfindungsgemäß vorgesehen sind die Zweigrohrkörpern von elektrischem Strom durchflossen, wobei die Stromstärke in Abhängigkeit von dessen sich mit der Temperatur ändernden Widerstand gesteuert wird. Die Zweigrohrkörper fungieren dabei als Temperaturfühler. Die Stromstärke und somit die Temperatur wird vorzugsweise mit Hilfe eines externen Reglers reguliert.

Vorzugsweise weisen der Hauptrohrkörper und die Zweigrohrkörper einen runden, ovalen, rechteckigen, quadratischen, oder mehreckigen Querschnitt auf. Dadurch kann die Form des Hauptrohrkörpers und/oder der Zweigrohrkörper flexibel an die Bedingungen und die räumlichen Grenzen innerhalb einer bestehenden Anlage angepasst werden. Bei einem runden oder ovalen Querschnitt kann eine möglichst gleichmäßige Erwärmung des Gases im Rohrkörper, insbesondere in den Zweigrohrkörpern, erzielt werden, ohne dass dieser lokal überhitzt.

In einer bevorzugten Ausführungsform sind alle Zweigrohrkörper im Wesentlichen identisch ausgebildet. Dadurch kann einfach eingestellt werden, dass das Heißgas an allen Gasaustrittsöffnungen die gleiche Gasaustrittstemperatur aufweist. Somit kann die Kunststofffolie über den Bereich, in dem Zweigrohrkörper mit jeweils mindestens einer Gasauslassöffnung angeordnet sind, jeweils mit der gleichen Temperatur verschweißt werden.

Vorzugsweise bilden die Zweigrohrkörper und/oder der Hauptrohrkörper einen Druckspeicher aus. Dadurch wird sichergestellt, dass alle Zweigrohrkörper, die das Gas erhitzen, gleichmäßig durchströmt werden. Wenn das Gas alle Zweigrohrkörper gleichmäßig durchströmt und somit gleichmäßig erhitzt wird, weist das austretende Heißgas eine definierte einheitliche Temperatur über alle Gasauslassöffnungen auf.

Dabei ist besonders bevorzugt, dass zumindest der Hauptrohrkörper einen Druckspeicher ausbildet. Dadurch wird das Gas im Hauptrohrkörper mit Überdruck geführt und alle Zweigrohrkörper werden gleichmäßig von Gas durchströmt. Das Gas wird somit in allen Zweigrohrkörpern gleichmäßig erhitzt und die Temperatur des austretenden Heißgases ist präzise einstellbar. Ein Druckspeicher kann beispielweise dadurch ausgebildet werden, dass der Hauptrohrkörper ein größeres Innenvolumen aufweist, als ein Gesamtinnenvolumen der vorgesehenen Zweigrohrkörper.

Die Funktion als Druckspeicher, insbesondere des Hauptrohrkörpers, wird durch Verengungen in Form von Drosselstellen unterstützt. Vorzugsweise sind diese im Bereich der Zweigstellen als Zuluftdrosseln und/oder an den Gasauslassöffnungen als Abluftdrosseln vorgesehen. Es wird ein erhöhter Druck innerhalb der Vorrichtung ausgebildet, der einen gleichmäßigen Gasausstrom bewirkt.

In einer bevorzugten Ausführungsform sind die Zweigstellen, welche den Hauptrohrkörper mit den Zweigrohrkörpern verbinden, in einer Umfangswand des Hauptrohrkörpers angeordnet. Dieses stellt eine Anordnung dar, die einfach und kostengünstig hergestellt werden kann und zudem eine präzise Temperatur des austretenden Heißgases gewährleistet.

Der Hauptrohrkörper, der ein rohrförmiger Körper sein kann, weist vorzugsweise eine Gaseintrittsöffnung an einem stirnseitigen Ende auf und ist an einem gegenüberliegenden Rohrende geschlossen ausgebildet. Diese Anordnung ist einfach herstellbar.

In einer alternativen Ausgestaltung kann die Gaseintrittsöffnung in der Umfangswand des Hauptrohrkörpers ausgebildet sein, dann sind vorzugsweise beide Rohrenden geschlossen ausgebildet.

Alternativ kann der Hauptrohrkörper auch als geschlossener Kreis mit einer Gaseinlassöffnung in der Umfangswand ausgebildet sein. Diese Anordnung kann beispielweise vorteilhaft sein, wenn der vorhandene Platz in einer Schweißeinrichtung nur einen seitlichen Gaseinlass in der Umfangswand zulässt oder kein ausreichender Platz für einen langgestreckten Hauptrohrkörper vorhanden ist.

Durch die verschiedenen Ausgestaltungsmöglichkeiten der Vorrichtung, insbesondere des Hauptrohrkörpers, kann flexibel auf die Platzverhältnisse innerhalb von Schweißanlagen, insbesondere von bestehenden Anlagen, eingegangen werden.

Vorzugsweise sind alle vorgesehenen Zweigrohrkörper auf einer Achse in der Umfangswand des Hauptrohrkörpers angeordnet. Diese Ausgestaltung ermöglicht eine einfache Herstellung der Vorrichtung und eine gleichmäßige Temperierung des Heißgases.

In einer bevorzugten Ausgestaltung sind die Mehrzahl an Zweigrohrkörpern im Wesentlichen parallel zueinander angeordnet. Dadurch wird eine einfach und kostengünstig herstellbare und platzsparende Vorrichtung zum Verschweißen von Kunststofffolien ermöglicht.

Vorzugsweise weist die wenigstens eine Gasauslassöffnung eines Zweigrohrkörpers einen im Wesentlichen runden, ovalen oder schlitzförmigen Querschnitt aufweist. Dabei können die ovalen oder schlitzförmigen Gasauslassöffnung quer, längs oder diagonal zur Bewegungsrichtung der zu verschweißenden Kunststofffolie angeordnet sein.

Durch die Form der Gasauslassöffnung kann der Heißgasstrom auf die Kunststofffolie reguliert werden. Wird bespielweise eine sehr schmale Verschweißnaht benötigt, sind bevorzugt schlitzförmige Gasauslassöffnungen vorzusehen, deren Schlitz in Bewegungsrichtung der Kunststofffolie ausgerichtet ist.

In einer bevorzugten Fortbildung weisen die Zweigrohrkörper eine gebogene Form auf, wobei die Zweigrohrkörper insbesondere schraubenförmig um den Hauptrohrkörper gebogen angeordnet sind. Dabei werden die Zweigrohrkörper beabstandet zueinander und zu dem Hauptrohrkörper geführt. Dieses verhindert, dass es zu einem Kurzschluss aufgrund eines direkten Kontakts zweier stromdurchflossener Bauteile kommt. Durch diese Fortbildung ist eine möglichst platzsparende Anordnung erzielbar.

In einer bevorzugten Ausführungsform sind die von elektrischem Strom durchflossenen Zweigrohrkörper elektrisch in Reihe geschaltet. Bei dieser Reihenschaltung handelt es sich um eine elektrische Hintereinanderschaltung zweier oder mehrerer Bauelemente in einer Schaltung, so dass sie einen Strompfad bilden. Vorteilhaft bei einer elektrischen Reihenschaltung der Zweigrohrkörper ist, dass eine relativ hohe Gesamtspannung aufgrund eines erhöhten Gesamtwiderstandes eingesetzt werden kann, um den zur Erwärmung erforderlichen Stromfluss in den einzelnen Zweigrohrkörpern zu erreichen.

In einer alternativen Ausgestaltung kann vorgesehen sein, dass die mehreren von elektrischem Strom durchflossenen Zweigrohrkörper elektrisch parallel geschaltet sind. Zwar benötigt auch hier jeder Zweigrohrkörper einen relativ geringen Teilstrom, allerdings summieren sich die Teilströme bei einer Parallelschaltung in der Versorgungsleitung zu einem hohen Gesamtstrom für eine entsprechend dimensionierte Stromversorgung. Vorteilhaft ist bei einer Parallelschaltung, dass eine geringere Gesamtspannung benötigt wird, als bei einer vergleichbaren Reihenschaltung.

Vorzugsweise bilden mehrere miteinander verbundene Module einen Hauptrohrkörper aus. Die Abschnitte des Hauptrohrkörpers mehrere Module bilden dabei den Hauptrohrkörper. Ein erstes Modul, welches mit einer Gaszufuhr verbunden ist, bildet dabei die Gaseinlassöffnung des gemeinsamen Hauptrohrkörpers aus.

Vorzugsweise sind dabei mehrere Module miteinander verbunden, wobei mindestens ein Verbindungselement vorgesehen ist, welches jeweils mindestens zwei Module miteinander verbindet. Das Verbindungselement kann in Form einer Schraube und eines Gegengewindes ausgebildet sein, so dass eine Verschraubung von mindestens zwei Modulen ermöglicht wird.

In einer bevorzugten Ausführungsform ist das Verbindungselement als Stange ausgebildet, so dass die Module auf diese Stange geschoben werden können. Insbesondere weist dabei die Stange an ihrem Ende ein Gewinde auf, welches die Module befestigt. Dadurch wird ein Verbindungselement ermöglicht, welches die Module miteinander verbindet. Zudem können Stangen als Verbindungselemente einfach auf die benötigte Länge der Vorrichtung angepasst werden.

In einer alternativen Ausgestaltung ist vorgesehen, dass die Module stoffschlüssig miteinander verbunden werden. Dieses kann beispielweise durch Kleben oder Schweißen erfolgen. Auch hierdurch kann flexibel auf die Anforderungen an die Vorrichtung in Hinblick auf die Anzahl der Zweigrohrkörper und der Gasauslassöffnungen eingegangen werden.

In einer bevorzugten Ausgestaltung ist vorgesehen, dass die Verbindungselemente einen elektrischen Schaltkreis mit den jeweiligen Zweigrohrkörpern der Module ausbilden, wobei die Verbindungselemente beispielweise zur Spannungsrückführung dienen können. Dadurch ist eine einfache Herstellung der einzelnen Module und der Vorrichtung möglich, wobei ein geschlossener Schaltkreis zwischen mehreren Modulen auf einfache Weise ermöglicht werden kann.

In einer bevorzugten Fortbildung weist jedes Modul eine elektrische Isolationsschicht auf. Diese Isolationsschicht trennt beispielweise wenigstens einen Abschnitt des Hauptrohrkörpers in zwei elektrisch voneinander isolierte Bereiche. Werden nun mehrere Module miteinander verbunden, kann sehr einfach eine elektrische Reihenschaltung der Module, insbesondere der Zweigrohrkörper der Module, ermöglicht werden. Die Isolationsschicht trennt somit die Pole, in Form der elektrischen Zuleitung und Ableitung, und ermöglicht dadurch einen Stromfluss durch die Zweigrohrkörper in Form einer elektrischen Reihenschaltung.

Vorzugsweise ist mindestens ein Endmodul vorgesehen. Das Endmodul entspricht beispielweise einem Modul mit einem einseitig, gasdicht verschlossenen Abschnitt eines Hauptrohrkörpers. Dadurch wird eine Vorrichtung ermöglicht, die modular aufgebaut ist und einen Hauptrohrkörper aufweist, in den Gas einströmt, welches dann über Zweigstellen aufgetrennt wird und die Zweigrohrkörper durchströmt, in welchen das Gas erhitzen wird.

Alternativ weist das Endmodul lediglich eine Abdeckung auf, die den Hauptrohrkörper zumindest an einem Ende verschließen kann.

In einer alternativen Ausgestaltung können zwei Endmodule vorgesehen sein. Dadurch wird ein Hauptrohrkörper ausgebildet, der zwei geschlossene Enden am rohrförmigen Körper aufweist, wobei eine Gaseinlassöffnung in einer Umfangswand des Hauptrohrkörpers vorgesehen sein kann.

In einer bevorzugten Ausführungsform schließt das Endmodul den elektrischen Schaltkreis. Das Endmodul ermöglicht beispielweise die Spannungsrückführung bei einer elektrischen Reihenschaltung der Zweigrohrkörper.

Vorzugsweise befestigt das Endmodul die vorhergehenden Module auf dem mindestens einen Verbindungselement. Ist das Verbindungselement beispielweise als Stange ausgebildet, auf welche die einzelnen Module gesteckt werden, stellt das Endmodul eine Befestigung der Module an dem Verbindungselement dar. In einer bevorzugten Ausgestaltung kann die Befestigung des Endmoduls an dem Verbindungselement durch ein Gewinde im Endbereich des Verbindungselements und ein Gegengewinde am Endmodul erfolgen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer Vorrichtung aus dem Stand der Technik,
- Fig. 2: eine schematische Schnittansicht einer Ausführungsform eines Zweigrohrkörpers einer erfindungsgemäßen Vorrichtung nach Fig. 5,
- Fig. 3: eine schematische Seitenansicht des Zweigrohrkörpers in Fig. 2,
- Fig. 4: eine perspektivische Ansicht eines Moduls zum Aufbau einer erfindungsgemäßen Vorrichtung nach Fig. 5,
- Fig. 5: eine perspektivische Seitenansicht einer modular aufgebauten Ausführungsform einer erfindungsgemäßen Vorrichtung,
- Fig. 6: eine perspektivische Schnittansicht der in Fig. 5 dargestellten Ausführungsform,
- Fig. 7: eine Explosionsdarstellung der in Fig. 5 und Fig. 6 gezeigten Ausführungsform einer erfindungsgemäßen, modular aufgebauten Vorrichtung.

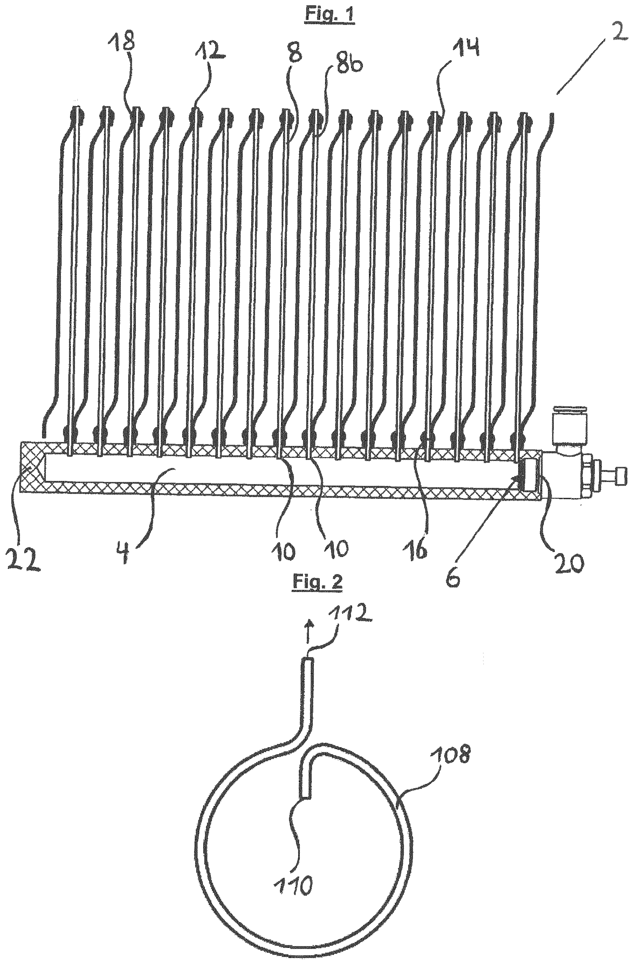

Fig. 1 zeigt eine Vorrichtung 2 nach dem Stand der Technik mit einem Hauptrohrkörper 4 mit einer Gaseinlassöffnung 6. Der Hauptrohrkörper 4 steht mit einer Mehrzahl von Zweigrohrkörpern 8 an Zweigstellen 10 in Gasverbindung. Die Zweigrohrkörper 8 weisen jeweils mindestens eine, insbesondere genau eine Gasauslassöffnung 12 auf.

Die Zweigrohrkörper 8 sind von elektrischem Strom durchflossen, wodurch diese erhitzt werden. Das durchströmende Gas nimmt die Hitze auf und wird als Heißgas auf eine in einem Abstand zu den Gasauslassöffnungen 12 geführte Kunststofffolie geblasen. Dieses ist hier nicht dargestellt.

Fig. 1 zeigt eine Reihenschaltung der Zweigrohrkörper 8, wobei jeweils ein Zweigrohrkörperende 14 eines Zweigrohrkörpers 8 mit einem Zweigrohrkörperanfang 16 des benachbarten Zweigrohrkörpers 8b elektrisch verbunden ist. Dadurch wird der Zweigrohrkörper 8 nahezu über seine Gesamtlänge von Strom durchflossen, wodurch das Gas bestmöglich erhitzt werden kann.

Vorzugsweise sind die elektrischen Kontakte 18 jeweils auf entgegengesetzten Enden des jeweiligen Zweigrohrkörpers 8 angeordnet. Dadurch kann der Strömungsweg des Gases im Zweigrohrkörper 8 bestmöglich zur Erhitzung des Gases genutzt werden.

In Fig. 1 ist die Gaseinlassöffnung 6 an einer Stirnseite 20 des Hauptrohrkörpers 4 angeordnet. Das gegenüberliegende Ende 22 des Hauptrohrkörpers 4, welches der Gaseinlassöffnung 6 gegenüberliegt, ist hier verschlossen dargestellt, allerdings sind auch andere Ausführungsformen möglich.

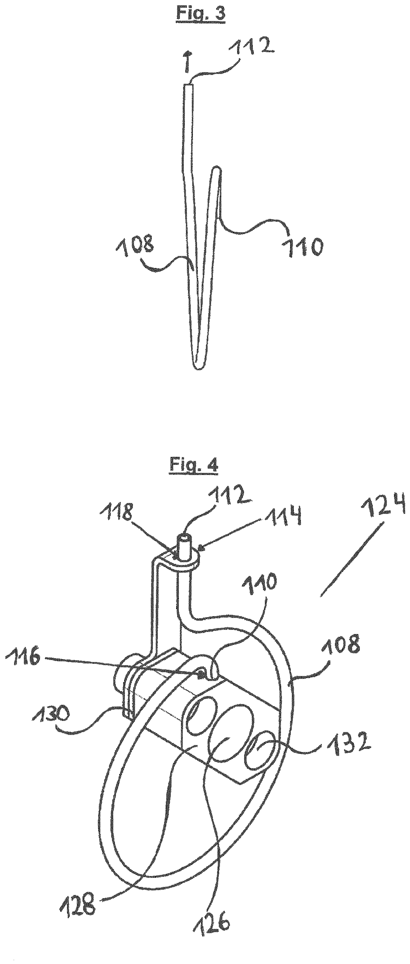

Fig. 2 und Fig. 3 zeigen eine andere Ausführungsform der Zweigrohrkörper 108. Dabei ist der Zweigrohrköper 108 gebogen, insbesondere schraubenförmig ausgebildet. Vorzugsweise ist der Zweigrohrkörper 108 in dieser Ausführungsform um den Hauptrohrkörper 104 gebogen, allerdings ist der Hauptrohrkörper 104 in den Fig. 2 und 3 nicht dargestellt.

Fig. 2 zeigt eine Schnittansicht durch den Zweigrohrkörper 108. In Fig. 3 ist hingegen eine Seitenansicht auf denselben Zweigrohrkörper 108 dargestellt. In beiden Fig. 2 und 3 strömt das Gas vom Hauptrohrkörper 104 über die Zweigstellen 110 in den Zweigrohrkörper 108. Diese sind von elektrischem Strom durchflossen und erhitzen das durchströmende Gas. Das Heißgas tritt durch die Gasauslassöffnungen 112 des jeweiligen Zweigrohrkörpers 108 aus und wird auf die zu verschweißende Kunststofffolie geblasen. Das austretende Heißgas ist durch einen Pfeil angedeutet. In der hier gezeigten Ausführungsform sind die Zweigstelle 110 und die Gasauslassöffnung 112 an den jeweiligen Stirnseiten der entgegengesetzten Enden des Zweigrohrkörpers 108 angeordnet, es sind aber auch andere Anordnungen möglich.

Diese in Fig. 2 und 3 gezeigten, gebogenen Zweigrohrkörper 108 können in einer fest montierten Vorrichtung 2, wie beispielweise in Fig. 1 gezeigt, sowie in einer modular aufgebauten Vorrichtung 102 eingesetzt werden.

Fig. 4 zeigt eine schematische Darstellung eines Moduls 124 mit mindestens einem mit elektrischem Strom durchflossenen Zweigrohrkörper 108 mit wenigstens einer Gasauslassöffnung 112, wenigstens einer Zweigstelle 110 und wenigstens einen Abschnitt 126 des Hauptrohrkörpers 104 auf.

Der Zweigrohrkörper 104 weist zwei Pole auf, damit er von Strom durchflossen werden kann. Der eine Pol wird durch die Umfangswand 128 des Abschnitts 126 des Hauptrohrkörpers 104 gebildet und steht mit dem Zweigrohrkörperanfang 116 in elektrischen Kontakt, der andere Pol ist als elektrischer Kontakt 118 in einem Bereich des Zweigrohrkörperendes 114 angeordnet.

Um eine Reihenschaltung zu ermöglichen, weist jedes Modul 124 eine Isolationsschicht 130 auf, die jeweils die zwei Pole elektrisch voneinander trennt.

In der gezeigten Ausführungsform sind in der Umfangswand 128 des Abschnitts 126 des Hauptrohrkörpers 104 zwei zusätzliche Aussparungen 132 vorgesehen. Diese können zum Verbinden mehrerer Module 124 dienen.

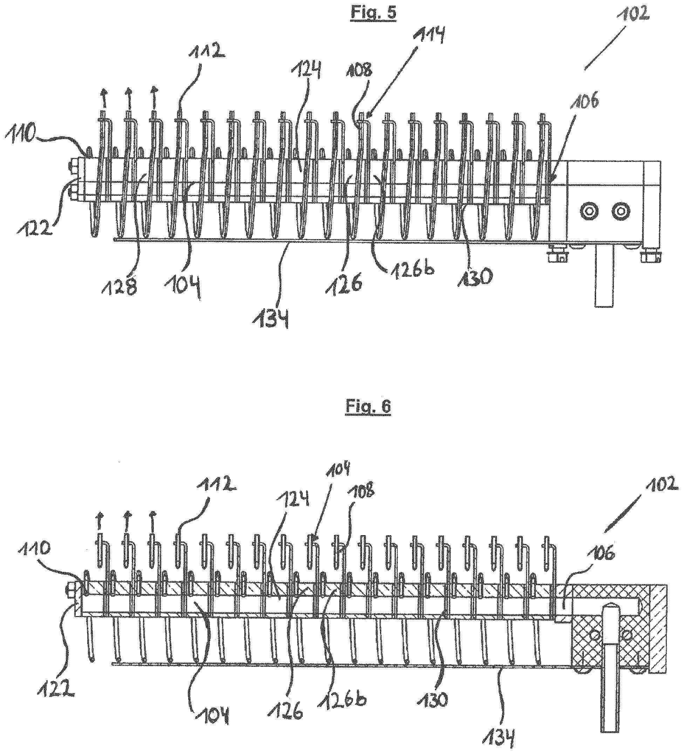

Fig. 5 zeigt eine schematische Darstellung einer Draufsicht auf eine Ausführungsform einer erfindungsgemäß modular aufgebauten Vorrichtung 102. Dabei sind mehrere der in Fig. 4 dargestellten Module 124 miteinander verbunden.

Der Hauptrohrkörper 104 weist eine Gaseinlassöffnung 106 an einem Ende und ein geschlossenes, gegenüberliegendes Ende 122 auf. Der Hauptrohrkörper 104 wird von Gas durchströmt und ist mit einer Mehrzahl von Zweigrohrkörpern 108 an Zweigstellen 110 verbunden. Die Zweigrohrkörper 108 sind schraubenartig um den Hauptrohrkörper 104 gebogen. Das Gas strömt durch die Gaseinlassöffnung 106 in den Hauptrohrkörper 104 und wird an den Zweigstellen 110 auf mehrere Zweigrohrkörper 108 aufgeteilt. In den Zweigrohrkörpern 108, die von einem elektrischen Strom durchflossen sind, wird das Gas erhitzt und als Heißgas durch die jeweils mindestens eine Gasauslassöffnung 112 auf die zu verschweißende Kunststofffolie geblasen. Das Heißgas ist durch Pfeile symbolisch dargestellt.

In der in Fig. 5 dargestellten Ausführungsform sind die Zweigrohrkörper 108 in einer elektrischen Reihenschaltung miteinander verbunden. Die Pole sind wie oben beschrieben angeordnet. Der erste Pol wird durch die Umfangswand 128 eines Abschnitts 126 des Hauptrohrkörpers 104 gebildet. Der zweite Pol am Zweigrohrkörperende 114 ist mit der Umfangswand 128 eines benachbarten Abschnitts 126b des Hauptrohrkörpers 104 eines benachbarten Moduls 124 elektrisch verbunden. Zwischen den Abschnitten 126, 126b der des Hauptrohrkörpers 104 ist jeweils eine elektrische Isolationsschicht 130 vorgesehen.

In der hier dargestellten Ausführungsform ist die Vorrichtung 102 an einer Platte 134 montiert, die der der Befestigung der Vorrichtung 2 innerhalb einer Anlage und/oder der Temperaturabschirmung der Vorrichtung 2 von anderen Bauteilen der Anlage dienen kann.

Fig. 6 zeigt eine Schnittansicht der in Fig. 5 dargestellten Ausführungsform der erfindungsgemäßen Vorrichtung 102.

Bei der in Fig. 5 und 6 dargestellten, modular aufgebauten Ausführungsform der erfindungsgemäßen Vorrichtung 102 sind mehrere Module 124 miteinander verbunden.

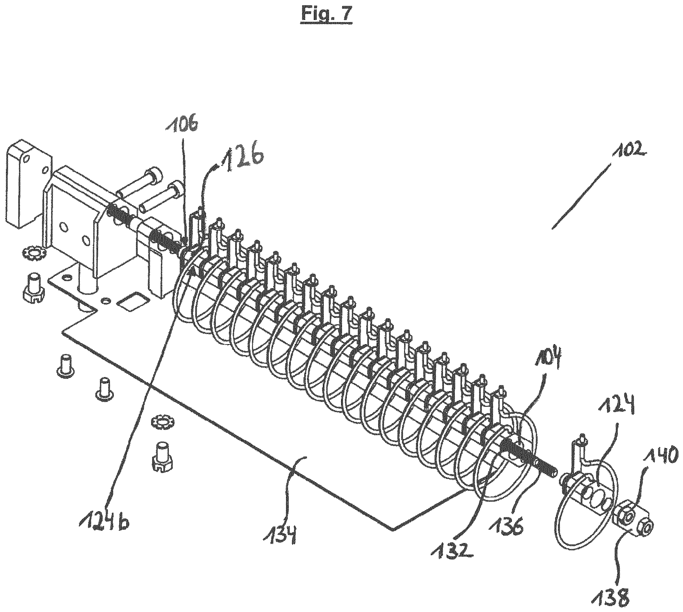

So können die Module 124 beispielweise auf Verbindungselemente 136, insbesondere in Form von Stangen, aufgesteckt werden, wie es in Fig. 7 dargestellt ist.

Fig. 7 zeigt eine schematische Explosionsdarstellung der in Fig. 5 und Fig. 6 dargestellten Ausführungsform einer modular aufgebauten Vorrichtung 102.

Dabei sind mehrere der in Fig. 6 dargestellten Module 124 miteinander verbunden. Die Module 124 sind auf Verbindungselemente 136 in Form von Stangen aufgeschoben, wobei die Verbindungselemente 136 in den Aussparungen 132 angeordnet sind. Der Abschnitt 126 des Hauptrohrkörper 104 eines ersten Moduls 124b fungiert als Gaseinlassöffnung 106. Ein Endmodul 138 verschließt den Hauptrohrkörper 104, der durch die Abschnitte 126 des Hauptrohrkörpers 104 der Module 124 ausgebildet ist, gasdicht nach außen. Dieses Endmodul 138 ist bei der gezeigten Ausführungsform am Gaseinlassöffnung 106 gegenüberliegenden Ende 122 des Hauptrohrkörpers 104 angeordnet. Eine Befestigung des Endmoduls 138 an den Verbindungselementen 136 in Form von Stangen erfolgt mit Hilfe von Muttern 140.

Die Vorrichtung 102 in Fig. 7 weist eine Platte 134 auf. Zudem sind weitere Befestigungsmittel in Form von Schrauben dargestellt, welche die Vorrichtung 102 in einer Kunststofffolienschweißanlage befestigen können.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 2, 102: Vorrichtung
- 4, 104: Hauptrohrkörper
- 6, 106: Gaseinlassöffnung
- 8, 108: Zweigrohrkörper
- 10, 110: Zweigstellen
- 12, 112: Gasauslassöffnungen
- 14, 114: Zweigrohrkörperende
- 16, 116: Zweigrohrkörperanfang
- 18, 118: elektrischer Kontakt
- 20, 120: Stirnseite des Hauptrohrkörpers
- 22, 122: gegenüberliegendes Ende des Hauptrohrkörpers 4
- 124: Modul
- 124b: erstes Modul
- 126: Abschnitt des Hauptrohrkörpers 104
- 126b: benachbarter Abschnitt des Hauptrohrkörpers 104
- 128: Umfangswand des Abschnitts 126 des Hauptrohrkörpers 104
- 130: Isolationsschicht
- 132: Aussparungen
- 134: Platte
- 136: Verbindungselemente
- 138: Endmodul
- 140: Mutter

## Patentansprüche

1. Vorrichtung zum Verschweißen von Kunststofffolien mittels Heißgas mit wenigstens einem von elektrischem Strom zur Erwärmung des Heißgases durchflossenen Rohrkörper, wobei die Vorrichtung mindestens eine Gaseinlassöffnung (106) und mehrere benachbart zueinander angeordnete Gasauslassöffnungen (112) aufweist, aus denen die Kunststofffolie mit Heißgas angeblasen wird, wobei die wenigstens eine Gaseinlassöffnung (106) an einem Hauptrohrkörper (104) vorgesehen ist, der mit einer Mehrzahl von Zweigrohrkörpern (108) an Zweigstellen (110) in Gasverbindung steht, wobei die Zweigrohrkörper (108) jeweils wenigstens eine Gasauslassöffnung (112) aufweisen und alle Zweigrohrkörper (108) von elektrischem Strom durchflossen sind, **dadurch gekennzeichnet, dass** die Vorrichtung modular aufgebaut ist, wobei jedes Modul (124) mindestens einen mit elektrischem Strom durchflossenen Zweigrohrkörper (108) mit wenigstens einer Gasauslassöffnung (112), wenigstens eine Zweigstelle (110) und wenigstens einen Abschnitt (126) des Hauptrohrkörpers (104) aufweist.

2. Vorrichtung nach Anspruch 1, **dadurch gekennzeichnet, dass** die Zweigrohrkörper (108) im Wesentlichen identisch ausgebildet sind.

3. Vorrichtung nach einem der vorangegangenen Ansprüche, **dadurch gekennzeichnet, dass** die Zweigrohrkörper (108) und/oder der Hauptrohrkörper (104) einen Druckspeicher ausbilden.

4. Vorrichtung nach einem der vorangegangen Ansprüche, **dadurch gekennzeichnet, dass** die Zweigstellen (110), welche den Hauptrohrkörper (104) mit den Zweigrohrkörpern (108) verbinden, in einer Umfangswand des Hauptrohrkörpers (104) angeordnet sind.

5. Vorrichtung nach einem der vorangegangenen Ansprüche, **dadurch gekennzeichnet, dass** die Mehrzahl an Zweigrohrkörpern (108) im Wesentlichen parallel zueinander angeordnet sind.

6. Vorrichtung nach einem der vorangegangenen Ansprüche, **dadurch gekennzeichnet, dass** die eine wenigstens eine Gasauslassöffnung (112) eines Zweigrohrkörpers (108) einen im Wesentlichen runden, ovalen oder schlitzförmigen Querschnitt aufweist.

7. Vorrichtung nach einem der vorangegangenen Ansprüche, **dadurch gekennzeichnet, dass** die Zweigrohrkörper (108) eine gebogene Form aufweisen, wobei die Zweigrohrkörper (108) insbesondere schraubenförmig um den Hauptrohrkörper (104) gebogen angeordnet sind.

8. Vorrichtung nach einem der vorangegangen Ansprüche, **dadurch gekennzeichnet, dass** die von elektrischem Strom durchflossenen Zweigrohrkörper (108) elektrisch in Reihe geschaltet sind.

9. Vorrichtung nach einem der Ansprüche 1 bis 7, **dadurch gekennzeichnet, dass** die mehreren von elektrischem Strom durchflossenen Zweigrohrkörper (108) elektrisch parallel geschaltet sind.

10. Vorrichtung nach einem der vorhergehenden Ansprüche, **dadurch gekennzeichnet, dass** mehrere Module (124) miteinander verbunden sind, wobei mindestens ein Verbindungselement (136) vorgesehen ist, welches jeweils mindestens zwei Module (124) miteinander verbindet.

11. Vorrichtung nach Anspruch 10, **dadurch gekennzeichnet, dass** die Verbindungselemente (136) einen elektrischen Schaltkreis mit den jeweiligen Zweigrohrkörpern (108) der Module (124) ausbilden.

12. Vorrichtung nach Anspruch 10 oder 11, **dadurch gekennzeichnet, dass** jedes Modul (124) eine elektrische Isolationsschicht (130) aufweist.

13. Vorrichtung nach einem der Ansprüche 10 bis 12, **dadurch gekennzeichnet, dass** mindestens ein Endmodul (138) vorgesehen ist.

## Claims

1. Device for welding plastic films by means of hot gas with at least one tubular body, through which an electric current flows, for heating the hot gas, wherein the device comprises at least one gas inlet opening (106) and multiple gas outlet openings (112) disposed next to each other, from which hot gas is blown onto the plastic film, the at least one gas inlet opening (106) being provided on a main tubular body (104), which stands in gas communication with a plurality of branch tubular bodies (108) at branching points (110), wherein each of the branch tubular bodies (108) has at least one gas outlet opening (112) and all branch tubular bodies (108) have electric current flowing through them, **characterised in that** the device is of modular structure, wherein each module (124) has at least one branch tubular body (108) with electric current flowing through it with at least one gas outlet opening (112), and has at least one branching point (110) and at least one section (126) of the main tubular body (104).

2. Device according to claim 1, **characterised in that** the branch tubular bodies (108) are substantially identically formed.

3. Device according to any of the preceding claims, **characterised in that** the branch tubular bodies (108) and/or the main tubular body (104) form a pressure reservoir.

4. Device according to any of the preceding claims, **characterised in that** the branching points (110), which connect the main tubular body (104) with the branch tubular bodies (108), are disposed in a circumferential wall the main tubular body (104).

5. Device according to any of the preceding claims, **characterised in that** the plurality of branch tubular bodies (108) are disposed substantially parallel to each other.

6. Device according to any of the preceding claims, **characterised in that** the one at least one gas outlet opening (112) of a branch tubular body (108) has a substantially round, oval or slot-shaped cross-section.

7. Device according to any of the preceding claims, **characterised in that** the branch tubular bodies (108) have a curved shape, wherein the branch tubular bodies (108) are disposed curved, in particular in a spiral pattern, around the main tubular body (104).

8. Device according to any of the preceding claims, **characterised in that** the branch tubular bodies (108) through which electric current flows are connected electrically in series.

9. Device according to any of claims 1 to 7, **characterised in that** the plurality of branch tubular bodies (108) through which electric current flows are connected electrically in parallel.

10. Device according to any of the preceding claims, **characterised in that** multiple modules (124) are connected together, wherein at least one connection element (136) is provided, each such connecting together at least two modules (124).

11. Device according to claim 10, **characterised in that** the connection elements (136) form an electrical circuit with the respective branch tubular bodies (108) of the modules (124).

12. Device according to claim 10 or 11, **characterised in that** each module (124) has an electrical insulation layer (130).

13. Device according to any of claims 10 to 12, **characterised in that** at least one end module (138) is provided.

## Revendications

1. Dispositif de soudage de feuilles en matière plastique au moyen d'un gaz chaud avec au moins un corps tubulaire traversé par du courant électrique destiné à chauffer le gaz chaud, dans lequel le dispositif présente au moins une ouverture d'entrée de gaz (106) et plusieurs ouvertures de sortie de gaz (112) disposées au voisinage les unes des autres, à partir desquelles l'air chaud est soufflé dans la direction de la feuille en matière plastique, dans lequel l'au moins une ouverture d'entrée de gaz (106) est prévue sur un corps tubulaire principal (104), qui est en liaison gazeuse avec une pluralité de corps tubulaires ramifiés (108) en des points de ramification (110), dans lequel les corps tubulaires ramifiés (108) présentent respectivement au moins une ouverture de sortie de gaz (112) et tous les corps tubulaires ramifiés (108) sont traversés par du courant électrique, **caractérisé en ce que** le dispositif est de conception modulaire, dans lequel chaque module (124) présente au moins un corps tubulaire ramifié (108) traversé par du courant électrique avec au moins une ouverture de sortie de gaz (112), au moins un point de ramification (110) et au moins une partie (126) du corps tubulaire principal (104).

2. Dispositif selon la revendication 1, **caractérisé en ce que** les corps tubulaires ramifiés (108) sont réalisés de manière sensiblement identique.

3. Dispositif selon l'une quelconque des revendications précédentes, **caractérisé en ce que** les corps tubulaires ramifiés (108) et/ou le corps tubulaire principal (104) réalisent un accumulateur de pression.

4. Dispositif selon l'une quelconque des revendications précédentes, **caractérisé en ce que** les points de ramification (110), lesquels relient le corps tubulaire principal (104) aux corps tubulaires ramifiés (108), sont disposés dans une paroi périphérique du corps tubulaire principal (104).

5. Dispositif selon l'une quelconque des revendications précédentes, **caractérisé en ce que** la pluralité de corps tubulaires ramifiés (108) sont disposés sensiblement parallèlement les uns aux autres.

6. Dispositif selon l'une quelconque des revendications précédentes, **caractérisé en ce que** l'une au moins une ouverture de sortie de gaz (112) d'un corps tubulaire ramifié (108) présente une section transversale sensiblement ronde, ovale ou en forme de fente.

7. Dispositif selon l'une quelconque des revendications précédentes, **caractérisé en ce que** les corps tubulaires ramifiés (108) présentent une forme courbée, dans lequel les corps tubulaires ramifiés (108) sont disposés de manière courbée autour du corps tubulaire principal (104) en particulier de manière hélicoïdale.

8. Dispositif selon l'une quelconque des revendications précédentes, **caractérisé en ce que** les corps tubulaires ramifiés (108) traversés par du courant électrique sont montés électriquement en série.

9. Dispositif selon l'une quelconque des revendications 1 à 7, **caractérisé en ce que** les plusieurs corps tubulaires ramifiés (108) traversés par du courant électrique sont montés électriquement en parallèle.

10. Dispositif selon l'une quelconque des revendications précédentes, **caractérisé en ce que** plusieurs modules (124) sont reliés les uns aux autres, dans lequel au moins un élément de liaison (136) est prévu, lequel relie respectivement au moins deux modules (124) l'un à l'autre.

11. Dispositif selon la revendication 10, **caractérisé en ce que** les éléments de liaison (136) réalisent un circuit électrique avec les corps tubulaires ramifiés (108) respectifs des modules (124).

12. Dispositif selon la revendication 10 ou 11, **caractérisé en ce que** chaque module (124) présente une couche isolante électrique (130).

13. Dispositif selon l'une quelconque des revendications 10 à 12, **caractérisé en ce qu'**au moins un module d'extrémité (138) est prévu.
